# EUROPÄISCHE PATENTANMELDUNG

(11) **EP 2 395 316 A1**
(43) Veröffentlichungstag der Anmeldung: **14.12.2011**
(21) Anmeldenummer: 11169309.9
(22) Anmeldetag: 09.06.2011
(51) Int. Cl.: G01B 7/004

(54) **Koordinatenmessvorrichtung, Verfahren zum Betreiben einer Koordinatenmessvorrichtung und Computerprogrammprodukt**

(30) Priorität: 09.06.2010 DE 102010017304
(71) Anmelder: Knauer, Martin, 78648 Trossingen (DE)
(72) Erfinder: Knauer, Martin, 78648 Trossingen (DE)
(74) Vertreter: Klemm, Rolf

(57) **Zusammenfassung**

Es wird eine Koordinatenmessvorrichtung (1) zum Messen von dreidimensionalen Koordinaten an einem dreidimensionalen Objekt (100) beschrieben, mit einem Messkopf (10) mit einer Tasteinrichtung (12), mit Positionserfassungssensoren, die in einer definierten Lage zum Messkopf (10) angeordnet sind und einem Rechner (80) zum Erfassen und Auswerten von Positionsdaten der Tasteinrichtung (12) in einem Abtastvorgang am Objekt aus Werten von den Positionserfassungssensoren. Um ein dreidimensionales Messen eines Objekts (100) zu vereinfachen, sind die Positionserfassungssensoren als Inertialsensoren (40) in Form von translatorischen Beschleunigungssensoren (40) zur Erfassung von Translationen in X-Y-Z Richtung und Rotationen um X-, Y- und Z-Achsen und ein Zeitgeber (45) im Messkopf (10) ausgebildet sind.

## Beschreibung

### Stand der Technik

Die Erfindung bezieht sich auf eine Koordinatenmessvorrichtung zum Messen von dreidimensionalen Koordinaten an einem dreidimensionalen Objekt mit einem Messkopf mit einer Tasteinrichtung, mit Positionserfassungssensoren, die in einer definierten Lage zum Messkopf angeordnet sind und einem Rechner zum Erfassen und Auswerten von Positionsdaten der Tasteinrichtung in einem Abtastvorgang am Objekt aus Werten von den Positionserfassungssensoren. Die Erfindung bezieht sich auf ein Verfahren zum Betreiben einer Koordinatenmessvorrichtung mit einem Messkopf mit einer Tasteinrichtung, wobei die Lage der Tasteinrichtung und Messkopf durch Positionserfassungssensoren erfasst wird und bei einem Abtasten eines dreidimensionalen Objekts mittels der Tasteinrichtung ein Abtastpunkt in einem Rechner gespeichert wird. Die Erfindung bezieht sich auch auf ein Computerprogrammprodukt.

Um ein dreidimensionales Objekt auf Herstellungsqualität gegenüber Soll-Geometriemaßen, in Form von Zeichnungen oder CAD-Daten zu überprüfen oder die Geometrie eines Objekts zu digitalisieren, ist es bekannt eine dreidimensionale Koordinatenmessmaschine einzusetzen. Hierzu wird das Objekt mit einem Taster von der Messmaschine an verschiedenen, vorzugsweise charakteristischen Punkten abgetastet, die Tastpunkte werden von der Messmaschine in dreidimensionale Daten umgewandelt und von einer Anwendungssoftware in einem Hostcomputer als Ist-Daten aufgenommen und gegebenenfalls mit Soll-CAD-Daten des Objekts verglichen. Aus dem Vergleich der Daten wird auf die Herstellungsqualität des Objekts geschlossen und geprüft, ob das Objekt den Qualitätsanforderungen entspricht.

Es gibt Ständermessmaschinen, die entweder elektrisch oder manuell in drei Koordinaten verfahrbar sind. Ferner sind tragbare dreidimensional messende Messmaschinen mit einem Hostcomputer und Anwendungssoftware von der Firma Faro bekannt.

Es sind inertiale Messsysteme bekannt, die mit Inertialsensoren arbeiten. Durch eine Kombination mehrerer Inertialsensoren in einer inertialen Messeinheit werden die Beschleunigungen von sechs Freiheitsgraden, drei Rotationen und drei Translationen, gemessen. Durch Integration über die Zeit kann aus der Beschleunigung auf die Geschwindigkeit und einer weiterer Integration über die Zeit auf die Wegstrecke geschlossen werden, die in Form von Vektoren auf addiert werden, um eine genaue Position zu erfassen.

Die JP 09257461 A beschreibt eine dreidimensionale Koordinaten-Messvorrichtung mit drei Beschleunigungssensoren und drei Gyroskop-Sensoren für die X-,Y, und Z-Achse. Jeder Beschleunigungs- und Gyro-Sensor ist geometrisch auf einer anderen Ebene angeordnet, wobei jede der drei Ebenen zueinander rechtwinklig angeordnet ist.

Ferner sind Beschleunigungssensoren im Miniaturformat, insbesondere auf Basis der Piezotechnologie, als mikro-elektronische-mechanische Systeme, kurz MEMS, bekannt.

Es ist Aufgabe der vorliegenden Erfindung eine Messvorrichtung, ein Verfahren und ein Computerprogrammprodukt der Eingangs genannten Art derart weiterzubilden, so dass ein dreidimensionales Messen eines Objekts vereinfacht wird.

### Offenbarung der Erfindung

Erfindungsgemäß wird die Aufgabe durch den Gegenstand der Patentansprüche 1, 10 und 15 gelöst. Vorteilhafte Weiterbildungen ergeben sich aus den abhängigen Ansprüchen.

Es ist ein Gedanke der Erfindung, ein inertiales Messsystem, dass zur Navigation beispielsweise in Flugzeugen oder Raketen bekannt ist in einer Koordinatenmessvorrichtung einzusetzen.

Die Erfindung wird mit einer Koordinatenmessvorrichtung dadurch gelöst, dass die Positionserfassungssensoren als Inertialsensoren in Form von Beschleunigungsensoren zur Erfassung von translatorischen Bewegungen in X-Y-Z Richtung und Rotationen um eine X-, Y- und Z-Achse und ein Zeitgeber im Messkopf ausgebildet sind. Inertialsensoren sind Trägheitssensoren. Inertialsensoren haben gegenüber herkömmlichen Sensoren, wie sie beispielsweise in einer dreidimensionalen Ständermessmaschine oder einer mobilen Messmaschine mit einem Messarm ausgebildet sind, den Vorteil, dass eine hochpräzise und aufwendige Mechanik weggelassen werden kann und diese durch die Inertialsensoren in Verbindung mit einem Auswerterechner kompensiert werden. Somit ist die Koordinatenmessvorrichtung leicht, klein und transportabel und erfordert nur wenige spezifische Bauteile.

Um alle sechs Freiheitsgrade zu erfassen, umfassen vorzugsweise die Inertialsensoren ausschließlich Beschleunigungssensoren, zur Messung von linearen Bewegungen in einem dreidimensionalen x-y-z-Koordinatensystem, wobei sowohl translatorische als auch rotatorische Bewegungen erfasst werden. Dadurch sind die erfassten Positionswerte deutlich genauer als mit einer Kombination von Gyrosensoren gemäß dem Eingangs beschriebenen Stand der Technik.. Somit ist jede Bewegung des Messkopfs und der Tasteinrichtung erfassbar. Ferner ist im Messkopf in der Steuerelektronik ein Zeitgeber in Form eines Zeitchips ausgebildet, der zu den Werten der Beschleunigungssensoren einen synchronen hochgenauen Zeitstempel liefert und somit die Bewegungen des Messkopfes durch zweifache Ableitung über die Zeitdifferenz als Vektor darstellbar und somit die Wegänderungen von einem herkömmlichen Rechner mittels eines Programms berechenbar sind. Diese Ausgestaltung hat überraschenderweise gezeigt, dass die Genauigkeit um den Faktor ca.1000 höher ist, als wenn ein Zeitgeber eingesetzt wird, der in einem stationären Rechner vorhanden ist und als Zeitstempel verwendet wird. Somit lässt sich hochpräzise eine Objekt bzw. ein Objektabstand hinreichend genau erfassen. Die Auflösung des Zeitgebers in dem Messkopf ist höher als bei Verwendung eines Zeitgebers von einem Rechner. Ferner ist die Fehlertoleranz deutlich niedriger.

Weiterbevorzugt, wird ein bereits in einer Steuerelektronik vorhandener Zeitgeber im Messkopf eingesetzt. Die Steuerelektronik ist für die Positionserfassungssensoren für die Kommunikation mit dem Rechner als Erfassungs- und Auswertevorrichtung vorgesehen.

Die Erfindung wird mit einem Verfahren dadurch gelöst, dass von als Inertialsensoren in Form von translatorischen Beschleunigungssensoren ausgebildete Positionserfassungssensoren Werte in Form von X-Y-Z-Beschleunigungsvektoren und Lageänderungsvektoren erzeugt werden, den Vektoren Zeitstempel von einem Zeitgeber im Messkopf hinzugefügt werden, so das die Werte zweimal über die Zeitdifferenz zweier erfasster Beschleunigungsvektoren von dem Rechner ausgewertet und addiert werden, und somit Positionen der Tasteinrichtung, insbesondere an Abtastpunkten, ausgehend von einem definierten Ort durch Lage- und Ausrichtungsänderungen vom Rechner ausgewertet werden. Die Inertialsensoren sind vorzugsweise elektronische Sensoren, die ein elektrisches Messsignal liefern, dass durch eine Datenaufbereitung in Beschleunigungsvektoren und Rotationsvektoren umgewandelt wird. Die Inertialsensoren sind heute in Miniaturausführung am Markt verfügbar. Als Inertialsensoren sind translatorische ein, zwei oder drei-Achs Beschleunigungssensoren bekannt. Aufgrund der geringen Baugröße und den niedrigen Kosten sind als Inertialsensoren auf Quarzbasis hierzu bevorzugt.

Um eine möglichst sichere Signalübertragung vom Messkopf zum Rechner zu erreichen, ist der Messkopf über ein Datenkabel zur Informationsübertragung mit dem Rechner verbunden.

Um eine hochgenaue Messung, unabhängig von einer Oberflächenbeschaffenheit des zu messenden Objekts zu erzielen, ist die Tasteinrichtung als Tastspitze zum berührenden, mechanischen Abtasten des Objekts ausgebildet. Es können somit Messpunkte genauer definiert werden. Ferner kommt es auf die Oberflächensauberkeit nicht darauf an, da Messpunkte bzw. Abtastpunkte mechanisch abgetastet werden.

Gemäß einer weiter bevorzugten Ausführungsform ist die Koordinatenmessvorrichtung mit einer Übertragungseinrichtung zur drahtlosen Übertragung von Messdaten zwischen Messkopf und Rechner ausgebildet. Die drahtlose Übertragung der Messdaten hat den Vorteil, dass der Messkopf am zu messenden Objekt frei mit der Tastspitze bewegbar ist. Ein so genannter Kabelsalat wird verhindert. Die Handhabung ist vereinfacht, da auf ein Kabel und eine bestimmte Kabellänge nicht geachtet werden muss. Die drahtlose Übertragungseinrichtung kann jede bekannte drahtlose Übertragungsmethode umfassen, beispielsweise WLan, bluetooth, WiFi oder andere bekannte drahtlose Übertragungsverfahren.

Bevorzugt umfasst der Messkopf mindestens drei, insbesondere vier, translatorische 3-Achs-Beschleunigungssensoren zur Messung von linearen Bewegungen in dreidimensionalen x-y-z-Koordinaten sowie deren Rotation. Um die mindestens sechs Freiheitsgrade des Messkopfs zu erfassen, würde es theoretisch ausreichen, zwei 3-Achs-Beschleunigungssensoren einzusetzen. Mit drei Beschleunigungssensoren verbessert sich die Sicherheit und mit einem vierten translatorischen Beschleunigungssensor ist eine weitere Sicherheit gegeben, mit dem gegebenenfalls Messergebnisse verifiziert und/oder gemittelt werden können.

Gemäß einer die Erfindung weiterbildende Ausführungsform sind jeweils zwei Beschleunigungssensoren im Rechtenwinkel im Wesentlichen auf einer Ebene angeordnet, und insbesondere die Mittelpunkte zu einer 45-Grad-Achse versetzt angeordnet sind. Somit wird ein dreidimensionaler Raum besser aufgespannt. Gemäß einer die Erfindung weiterbildenden Ausführungsform sind die zwei Beschleunigungssensoren Paare auf parallelen Ebenen besonders bevorzugt spiegelbildlich zueinander angeordnet. Somit kann ein rechnerischer Tetraeder im Raum aufgestellt werden.

Um Bewegungen des Messkopfes noch exakter zu detektieren und somit die Messgenauigkeit zu verbessern, sind bevorzugt die Paare der Beschleunigungssensoren jeweils an gegenüberliegenden Enden des Netzkopfes angeordnet.

Gemäß einer bevorzugten Ausführungsform umfasst die Tasteinrichtung eine optische berührungslose, insbesondere mit einem Laser-Licht ausgebildete, Messeinrichtung. Dies hat den Vorteil, dass Konturen und gebogene Linien so genannte Freiformen berührungslos besser digitalisiert aufgenommen werden können. Ferner können auch labile Teile berührungslos erfasst werden. Berührungsloses Abtasten hat den weiteren Vorteil, das das Objekt keine Abdruckstellen aufweist, insbesondere können Positionen erfasst werden, die mit einer mechanischen Tastspitze schwer oder nicht zugänglich sind.

Weiter bevorzugt ist die Koordinatenmessvorrichtung mit einer Übertragungseinrichtung, besonders bevorzugt nach einem IEEE802.11-drahtlosen Übertragungsstandard, insbesondere auf 2,4 GHz Technologiebasis, zur drahtlosen Übertragung von Messdaten zwischen Messkopf und Rechner mit einer Reichweite von ca. drei Metern vorzugsweise 10 Metern, besonders bevorzugt 30 Metern ausgebildet. Dies hat den Vorteil, dass eine aufwendige lange Kabeltrommel nicht vorgesehen werden muss und die Koordinatenmessvorrichtung als portable Koordinatenmessvorrichtung betrieben kann. Außerdem ist sie bezüglich einem Volumen des Objekts deutlich freier, als das definierte und festgelegte Volumen eines Objekts bei Ständermessmaschinen oder Messmaschinen mit einem portablen Messarm. Somit können auch kostengünstig große dreidimensionale Objekte, ebenso wie kleine Objekte mit ein und der selben Koordinatenmessvorrichtung leicht gemessen werden.

Um die Handhabung der Koordinatenmessvorrichtung zu vereinfachen, ist vorzugsweise der Messkopf stiftförmig ausgebildet. Ein Messstift hat den Vorteil, dass er leicht in der Hand zu führen ist beispielsweise in Form eines vergrößerten Kugelschreibers, wobei die Tastspitze eine dem Kugelschreiber ähnliche Kugel mit nach geschaltetem Schalter oder Taster sein kann. Das Objekt wird also manuell mit der Koordinatenmessvorrichtung abgetastet.

Vorzugsweise werden die Positionsdaten und Abtastpunkte zwischen Messkopf und Rechner kabellos übertragen, wobei insbesondere ein Bezugspunkt und eine Bezugslage zur Justierung vor- und besonders bevorzugt nach dem Messen des Objekts vom Messkopf mit der Tastspitze eingenommen werden. Somit wird vor dem Messen das Messsystem inertialisiert und um die Fehlerrate zu reduzieren wird der Messkopf mit der Tastspitze zumindest nach dem Messen wieder in die Bezugslage mit Bezugspunkt gebracht, um eine Mittelwertbildung der Fehler zu erreichen.

Gemäß einer die Erfindung weiterbildenden Ausführungsform ist die Koordinatenmessvorrichtung mit einem zweiten Messkopf ausgebildet, wobei der zweite Messkopf mit dem zu vermessenden Objekt fest verbindbar ist. Ein zweiter Messkopf hat den Vorteil, dass das zu vermessende Objekt nicht statisch fixiert werden muss, sondern nur der zweite Messkopf mit dem Objekt. Somit kann während eines Messvorgangs das Objekt dynamisch verschoben bzw. bewegt werden, wenn zum Beispiel eine exakte Fixierung nicht möglich ist, weil eine exakte Lagerung nicht gewährleistet ist. Somit können Maße am zu vermessenden Objekt noch genauer und sicherer erfasst werden.

Gemäß eines weiter bevorzugten Verfahrens wird der Bezugspunkt mit Bezugslage in regelmäßigen Abständen während des Messvorgangs eingenommen, um eine sich aufaddierende Fehlerrate zu minimieren.

Um sicher dreidimensionale Bewegungen des Messkopfs zu erfassen, wird gemäß des erfindungsgemäßen Verfahrens von mindestens drei Beschleunigungssensoren rechnerisch ein dreidimensionaler rechteckförmiger Tetraeder aufgespannt, wobei der Tetraeder, durch eine spezielle Geometrieanordnung der mindestens drei Beschleunigungssensoren entsteht. Somit kann sicher die Translation und die Rotation des Messkopfes über Bewegungssensoren erfasst werden.

Um den Anforderungen einer Koordinatenmessvorrichtung gerecht zu werden, werden vorzugsweise die Abtastpunkte mit einer Genauigkeit von 0,2 mm/10m insbesondere 0,1 mm/10m gemessen, wobei Zeitwerte von einem Zeitgeber im Messkopf insbesondere von der Steuerelektronik im Messkopf in Verbindung mit den Messwerten der Beschleunigungswerte ausgewertet werden. Der Zeitgeber der Steuerelektronik des Messkopfes liefert eine sehr hohe Auflösung, die deutlich genauer ist, als Zeitwerte aus einem Rechner wären. Somit wird die Fehlerrate deutlich reduziert und unterschiedliche Laufzeiten und Taktungen ebenfalls reduziert, da die Taktrate besonders bevorzugt des Zeitgebers mit denen der Werte der Beschleunigungssensoren identisch ist.

Die hohe Genauigkeit der Abtastpunkte wird vor allem deshalb erreicht, da Beschleunigungssensoren im Mikroformat verfügbar sind, die beispielsweise Sensitivitäten von +/- 2g bei 10-Bit Auflösung im Bereich von 230-280 LSB/g erreichen wobei ein Temperaturfehler lediglich bei +/-0,01 %/°C auftritt. Ferner können die Mikro Beschleunigungssensoren mit einer Ausgabe-Datenrate (ODR) größer 100 Hz beispielsweise bis ca. 3200 Hz arbeiten. Ferner sind Beschleunigungssensoren vorhanden, die im 2-g-Messbereich beispielsweise mit 14 Bit Messdynamik minimale Beschleunigungen von 0,00025 g und Neigungsänderungen im Schwerefeld von nur 0,25° noch sicher detektieren lassen. Solche Beschleunigungssensoren übertreffen die Sensitivität herkömmlicher, bisher bekannter Beschleunigungssensoren um mehrere Größenordnungen.

Es ist überraschender Weise herausgefunden worden, dass eine hohe Genauigkeit der Abtastpunkte dadurch erreicht werden kann, dass die Koordinatenmessvorrichtung auf den Einsatzort, d.h. auf die Höhenmeter des Einsatzortes, kalibriert wird. Die MEMS-Beschleungiungssensoren sind so Sensitiv, dass diese auf eine unterschiedliche Erdbeschleunigung, die von den Höhenmeter des Einsatzortes abhängig ist, reagieren. Bei einem Einsatzort auf Meeresspielgelhöhe ergibt sich eine andere Erdbeschleunigung als bei einem Einsatzort auf 1000m Höhe.

Ferner ist überraschenderweise zur Verbesserung der Werte herausgefunden worden, dass die tatsächliche aktuelle Temperatur in die Auswertung der Messergebnisse mit erfasst und ausgewertet wird. Das heißt es ergeben sich abhängig von der Temperatur unterschiedliche Datenwerte. Die Datenwerte werden somit an die von einem Temperatursensor erfassten Temperaturmesswerte angepasst und entsprechend danach ausgewertet.

Gemäß eines weiterbevorzugten Verfahrens wird mit einem zweiten Messkopf, auf dem das zu vermessende Objekt definiert befestigt ist, eine Lageänderung des Objekts während des Messverfahrens erfasst, wobei mit dem ersten Messkopf das Objekt vermessen wird, und die Maße des Objekts durch eine Differenzbildung der Lageänderung des ersten und zweiten Messkopfes vom Rechner bestimmt werden. Somit kann das zu vermessende Objekt, dass ortsfest mit dem zweiten Messkopf verbunden ist, während des Messvorgangs bewegt werden. Wichtig ist nur, dass eine hochgenaue Fixierung des zweiten Messkopfes mit dem zu vermessenden Objekt erfolgt. Eine hochgenaue Lagerung des zu vermessenden Objekts während des Messvorgangs ist somit nicht mehr zwingend notwendig.

Die Aufgabe wird auch durch ein Computerprogrammprodukt dadurch gelöst, dass es in einen Programmspeicher eines Rechners mit Programmbefehlen ladbar ist, um alle Schritte des oben beschriebenen Verfahrens auszuführen, wenn das Programm im Rechner ausgeführt wird. Das Computerprogrammprodukt hat den Vorteil, dass es keine zusätzlichen Bauteile erfordert. Es sind individuelle Verbesserungen des erfindungsgemäßen Verfahrens leicht durchführbar. Weiter bevorzugt ist das Computerprogrammprodukt in einen portablen Computer, einen sogenannten Tablet-PC oder ein Smartphone ladbar. Der Computer umfasst eine standardisierte drahtlose Übertragungstechnikvorrichtung, um mit mindestens einem Messkontakt im Informationskontakt zu stehen bzw. herzustellen.

Die erfindungsgemäße Koordinatenmessvorrichtung umfasst somit ein oder zwei Messköpfe und das Computerprogrammprodukt, das in ein Smartphone, Tablet-PC oder herkömmlichen PC als Applikation ladbar ist.

Es versteht sich, dass die, vorstehend genannten und nachstehend noch zu erläuternden, Merkmale nicht nur in der jeweils angegebenen Kombination, sondern auch in anderen Kombinationen verwendbar sind.

### Kurze Beschreibung der Zeichnungen

Die Erfindung wird im Folgenden anhand eines Ausführungsbeispiels unter Bezugnahme auf Zeichnungen näher erläutert. Es zeigen:
- Fig. 1: eine schematische Darstellung der Koordinatenmessvorrichtung mit einer Schnittdarstellung eines Messkopfes,
- Fig. 2: eine räumliche Anordnung der Beschleunigungssensoren,
- Fig. 3: einen rechnerischen dreidimensionalen Tetraeder,
- Fig. 4: ein Koordinatensystem mit einem Objekt zur Inertialmessung und
- Fig. 5: ein Flussdiagramm eines erfindungsgemäßen Messverfahrens.

### Ausführungsformen der Erfindung

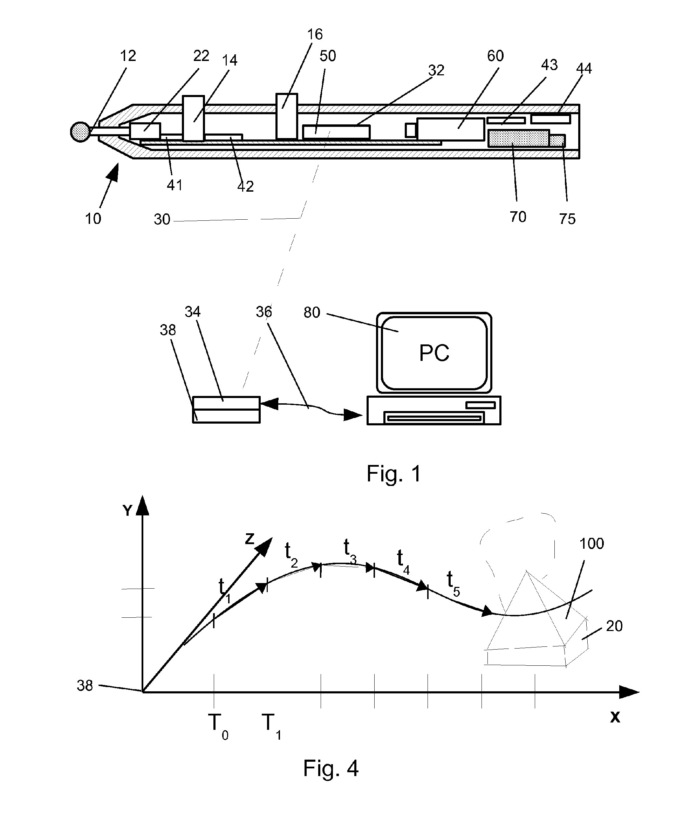

Die Fig. 1 zeigt eine erfindungsgemäße Koordinatenmessvorrichtung 1 zum Messen eines dreidimensionalen Objekts 100 mit einem Messkopf 10 und einer als Tastspitze ausgebildeten Tasteinrichtung 12 in einer schematischen Ansicht. Die Tastspitze ist bevorzugt eine Tastkugel aus Saphir und/oder Rubin. Der Messkopf 10 ist in der Fig. 1 vergrößert dargestellt, wohingegen ein Rechner 80 nicht maßstabsgerecht klein dargestellt ist. Der Rechner 80 kann als ein standardisierter Personalcomputer, Tablet-PC oder Smartphone mit Computeranwendungen ausgebildet sein. Der Messkopf 10 umfasst die Tastspitze 12 mit einem daran in mechanischer Wirkverbindung stehenden Taster 22 und Beschleunigungssensoren 40 als Inertialsensoren 40. Die Beschleunigungssensoren 40 sowie der Taster 22 und ein elektronisches Modul einer drahtlosen Übertragungseinrichtung, vorzugsweise nach IEEE 802.11-Standard sind auf einer Leiterplatte 50 mit einer Steuerelektronik 70 angeordnet. Der Messkopf 10 wird mit einer elektrischen Energie von einer Energiequelle 60, einer Batterie oder einem Akkumulator versorgt. Die Inertialsensoren 40 sind Beschleunigungssensoren, die jede Bewegungs- und Lageänderung vom Messkopf 10 erfassen und diese Daten an die drahtlose Übertragungseinrichtung 30 weiterleiten. Von einem Zeitgeber 75 der in der Steuerelektronik 70 vorhanden ist, wird ein Zeitstempel den ermittelten Vektordaten angefügt oder aufgeprägt. Somit wird ohne eine Zeitverzögerung punktgenau eine Zeit und eine Zeitdifferenz verschiedenen örtlichen Vektordaten zugeordnet, aus denen dann die Lage der Bewegung durch zweifache Ableitung ermittelt wird. Die drahtlose Übertragungseinrichtung 30 übermittelt drahtlos die Daten der Inertialsensoren 40 an einen Empfänger 34 der Drahtlosübertragungseinrichtung. Der Empfänger 34 ist entweder extern wie in der Fig. 1 gezeigt oder intern im Rechner 80 integriert. Bei einem externen Empfänger 34 ist vorzugsweise eine genormte Kabelverbindung 36 zum Rechner 80 vorgesehen.

Der Empfänger 34 umfasst ferner ein Bett 38 für den Messkopf 10, um eine Bezugslage mit Bezugspunkten für einen Messvorgang zu definieren. Um dem Rechner 80 zu signalisieren, dass der Messkopf 10 sich in einer Bezugslage, das heißt Nullpunktlage befindet, ist ein Bezugspunktschalter 16 am Messkopf zur Betätigung ausgebildet. Ferner umfasst der Messkopf 10 einen Ein-/Ausschalter 14.

Die Inertialsensoren 40 sind hier bevorzugt elektrische Sensoren, die kostengünstig am Markt verfügbar sind. Um Messgenauigkeit und ein Rauschen der Sensoren zu eliminieren, sind vorzugsweise Inertialsensoren 40 vorgesehen, die redundant die Bewegungsänderung und Lageänderung des Messkopfes 10 aufnehmen, beispielsweise sind Beschleunigungssensoren vorgesehen, die die translatorische Bewegung in x-, y-, und z-Richtung und die Rotation um diese Achsen doppelt, dreifach oder vielfach messen. Somit wird das Messergebnis verbessert und Messfehler eliminiert.

Um den Messkopf 10 gut zu halten, ist er wie in der Fig. 1 gezeigt, ergonomisch in Form eines Stifts ausgebildet.

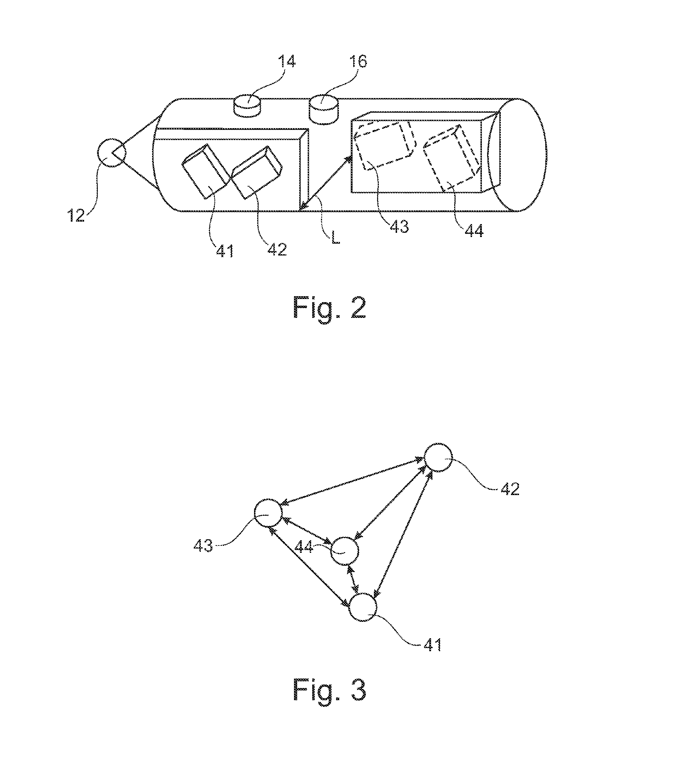

Die Fig. 2 zeigt eine perspektivische Ansicht des Messkopfes 10, wobei in dieser Ansicht lediglich die Anordnungen der Beschleunigungssensoren als bevorzugte Ausführungsform dargestellt sind. Die Beschleunigungssensoren 40, speziell 41 bis 44 sind jeweils paarweise im rechten Winkel zu einander angeordnet und zu einer Längsachse L bezüglich Ihrer Mittelpunkte versetzt um ein paar Millimeter angeordnet. Ferner sind die beiden Paare, die Beschleunigungssensoren 41 bis 44 diametral im Messkopf 10 angeordnet, dass heißt ein Paar ist an einem Ende des Messkopfes 10 und das andere Paar am anderen Ende des Messkopfes 10 positioniert. Die Beschleunigungssensoren sind zueinander als Paar spiegelbildlich angeordnet und auf zwei verschiedenen Ebenen innerhalb des Messkopfes beabstandet. Die Ebenen E1 und E2 sind zueinander versetzt, beispielsweise 9mm.

Die Fig. 3 zeigt schematisch einen räumlichen Tetraeder, der beispielsweise von den Achsen der Beschleunigungssensoren, die als dreiachsige Beschleunigungssensoren ausgebildet sind, aufgespannt wird, um jede Bewegung als Translation und Rotation zu erfassen. Sind die Messdaten als Bewegungs- und Rotationsdaten erfasst und vom Rechner ausgewertet, so können zur weiteren Vermessung eines in der Fig. 4 beschriebenen Objekts 100 herkömmliche spezielle dreidimensionale Geometrie- und Flächenmessprogramme eingesetzt werden, wie sie bei herkömmlichen Koordinatenmessmaschinen eingesetzt werden, die als hochgenaue Portalmessmaschinen aufgebaut sind. Mit einem derartigen Computerprogramm ist es möglich, diese Messergebnisse für weitere und aufbauende Systeme zu konvertieren und aufzubereiten.

Die Fig. 4 zeigt ein x-y-z-Koordinatensystem mit einem dreidimensionalen Objekt 100 in Form einer Pyramide. Um das Objekt 100 digital zu vermessen wird der Messkopf 10 aus einer festen Bezugslage aus dem Bett 38 entnommen und an das Objekt 100 geführt. Dabei wird die Bewegung des Messkopfes 10 in hinreichend kleinen Zeitabschnitten gemessen und vektoriell addiert. Die in der Fig. 4 gezeigten Messabschnitte sind lediglich schematisch abstrahiert und tatsächlich deutlich kleinere Schritte. Der Rechner 80 bereitet diese Daten auf, die ihm von den Inertialsensoren 40 über die drahtlose Übertragungseinrichtung 30 übermittelt werden. Da die Rechner heutzutage sehr leistungsfähig sind, ist der Rechner 80 ein herkömmlicher Rechner.

Die in der Fig. 4 gezeigten Zeitabschnitte t1 bis t5 sind deshalb sehr vereinfacht dargestellt und in Wirklichkeit sehr viel kleiner, vorzugsweise im Millisekundenbereich.

Die Fig. 4 zeigt mit einer gestrichelten Linie, wie beispielsweise der Messkopf 10 an weitere charakteristische Punkte des Objekts 100 herangeführt wird und mit der Tastspitze 12 abgetastet wird.

Die Fig. 4 zeigt ferner einen zweiten Messkopf 20 der mit dem zu vermessenden Objekt 100 ortsfest verbunden ist. Somit ist es nach Eichung des Messkopfes 10 bezüglich des Messkopfes 20 möglich, das Objekt 100 lediglich ortsfest am Messkopf 20 zu befestigen und während der Messung mittels des Messkopfes 10 zu bewegen. Der Rechner 80 wertet dann sowohl die Werte vom Messkopf 10 und 20 aus und subtrahiert die Änderungen des Messkopfes 20 von denen des Messkopfes 10, um das Objekt 10 im Volumen zu erfassen. Der Messkopf 20 ist bevorzugt genauso aufgebaut wie der Messkopf 10. Er umfasst also ebenfalls vier Beschleunigungssensoren.

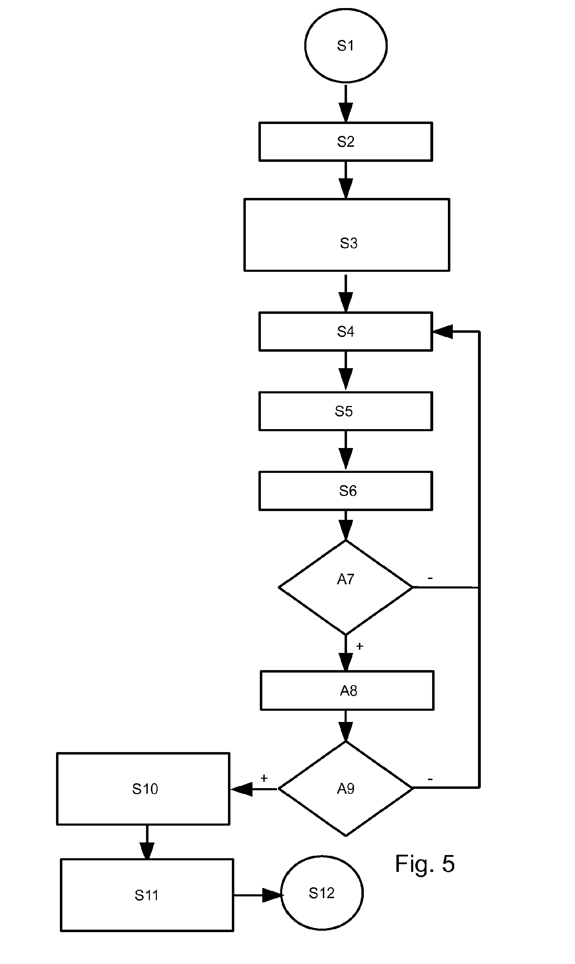

Die Fig. 5 zeigt ein Flussdiagramm, vereinfacht, wie es im Rechner 80 vorzugsweise als Computerprogrammprodukt, in einen Programmspeicher des Rechners 80 ladbar und dort abgespeichert ist.

Zu einem bestimmten Zeitpunkt wird mit einem Schritt S1 ein Messvorgang mit der Koordinatenmessvorrichtung 1 begonnen, beispielsweise durch Betätigung des Einschalters 14.

In einem zweiten Schritt S2 wird der Messkopf 10 mit der Tastspitze 12 in einer festgelegten Bezugslage mit Bezugspunkt justiert. Hierzu befindet sich der Messkopf 10 beispielsweise in einem Bett 38 und es wird entweder am Rechner 80 oder am Messkopf 10 über den Bezugspunktschalter 16 dem Rechner 80 der Justierzeitpunkt mitgeteilt. Ab diesem Zeitpunkt wird mit der inertialen Messung begonnen.

In einem Schritt S3 wird der Messkopf 10 herausgenommen und zum Objekt 100 geführt. Dabei erfährt der Messkopf 10 manuell translatorische und rotatorische Bewegungen und Beschleunigungen, die die Beschleunigungssensoren 41-44 erfassen.

In einem Schritt S4 werden die Vektordaten der Inertialsensoren 40 erzeugt, und von dem Zeitgeber 75 immer ein Zeitstempel aufgeprägt. Im Schritt S5 werden die Vektordaten mit einer Zeit auf den Rechner 80 zur Auswertung übertragen.

Im Schritt S6 wird die Lage und Ausrichtungsänderung durch Ableitung über die Zeitdifferenz zweier Beschleunigungsvektoren berechnet und als Vektor zum letzten Ausgangspunkt in Bruchteilen einer Sekunde, vorzugsweise im Millisekundenbereich hinzu addiert.

In der Abfrage A7 wird abgefragt, ob die Tastspitze 12 den Taster 22 betätigt hat, um festzustellen, ob ein Abtastpunkt am Objekt 100 detektiert worden ist. Ist dies der Fall, so wird der aktuelle Abtastpunkt im Rechner als digitaler Objektdatenpunkt gespeichert. Wird der Taster 22 nicht betätigt, so erfolgt ein Sprung zur Abfrage A9, zu der auch der Schritt S8 führt, bei dem geprüft wird, ob der Messvorgang weitergeführt werden soll oder beendet wird. Durch den ein Ein- bzw. Ausschalter 14 am Messkopf 10 wird der Messvorgang beendet.

In der Abfrage A9 wird also geprüft, ob der Ein- bzw. Ausschalter 14 betätigt worden ist. Ist das nicht der Fall, so erfolgt ein Rücksprung zu Schritt S4, so dass der Messvorgang fortgeführt wird. Wird der Einschalter 14 betätigt, so wird der Messvorgang vollständig abgeschlossen.

In einem Schritt S10 wird, um Messfehler zu kompensieren, die sich während der Messung, seit der letzen Justierung im Schritt S2 ergeben haben, am Ende des Messvorgangs der Messkopf wieder in das Bett 38 gelegt.

Die Bezugspunktjustierung kann während eines Messvorgangs abhängig von der gewünschten Genauigkeit des Messvorgangs wiederholt werden. Hierfür wird der Messkopf 10 wieder zur Justierung in das Bett 38 mit definiertem Bezugspunkt und Bezugslage gelegt.

In einem Schritt S11 folgt die Korrektur der berechneten digitalen Abtastpunkte aufgrund der zweiten oder jeder weiteren Bezugspunktjustierung.

Im Schritt S12 ist der Messvorgang durch endgültige Betätigung des Ein-/Ausschalters 14 beendet.

Das erfindungsgemäße Messverfahren kann bevorzugt über große Reichweiten zwischen 3 und 30 Metern mit standardisierten Übertragungsverfahren nach IEEE 802.11-Standard ausgeführt werden, ohne dass ein Kabel zwischen Messkopf 10 und Empfänger 34 erforderlich ist.

Ferner werden die Abtastpunkte mit einer sehr hohen Genauigkeit von vorzugsweise 0,2mm bis 0,01 mm/10m gemessen, in dem sehr kleine Zeitintervalle im Bereich von 100 Hz und höher bis einige tausend Hz, insbesondere einer minimalen Rauschdichte von 150 µg/√Hz mit sehr hoher Auflösung, beispielsweise mit einem 2-g-Messbereich insbesondere mit 14 Bit Messdynamik mit minimalen Beschleunigungen von 0,00025 g und Neigungsänderungen im Schwerefeld von nur 0,25°erzeugt werden. Alle Figuren zeigen lediglich schematische nicht maßstabsgerechte Darstellungen. Im Übrigen wird insbesondere auf die zeichnerischen Darstellungen für die Erfindung als Wesentlich verwiesen.

## Patentansprüche

1. Koordinatenmessvorrichtung (1) zum Messen von dreidimensionalen Koordinaten an einem dreidimensionalen Objekt (100) mit einem Messkopf (10) mit einer Tasteinrichtung (12), mit Positionserfassungssensoren, die in einer definierten Lage zum Messkopf (10) angeordnet sind und einem Rechner (80) zum Erfassen und Auswerten von Positionsdaten der Tasteinrichtung (12) in einem Abtastvorgang am Objekt (100) aus Werten von den Positionserfassungssensoren, **wobei** die Positionserfassungssensoren als Inertialsensoren in Form von translatorischen Beschleunigungsensoren (40) zur Erfassung von Translationen in X-Y-Z Richtung und Rotationenen um X-, Y- und Z-Achsen und ein Zeitgeber (45) im Messkopf (10) ausgebildet sind.

2. Koordinatenmessvorrichtung (1) nach Anspruch 1, **dadurch gekennzeichnet, dass** der Messkopf (10) mindestens drei, insbesondere vier, translatorische 3-Achs-Beschleunigungssensoren zur Messung von linearen Bewegungen in dreidimensionalen x-y-z-Koordinaten umfasst.

3. Koordinatenmessvorrichtung (1) nach Anspruch 1 oder 2, **dadurch gekennzeichnet, dass** jeweils zwei Beschleunigungssensoren im rechten Winkel im Wesentlichen auf einer Ebene angeordnet sind, wobei insbesondere die Mittelpunkte zu einer 45 Grad-Achse versetzt angeordnet sind.

4. Koordinatenmessvorrichtung (1) nach Anspruch 1, 2, oder 3, **dadurch gekennzeichnet, dass** die zwei Paare der Beschleunigungssensoren auf zueinander versetzten, im Wesentlichen insbesondere parallelen, Ebenen, besonders bevorzugt spiegelbildlich angeordnet sind, wobei die Paare der Beschleunigungssensoren jeweils an gegenüberliegenden Enden des Messkopfes angeordnet sind.

5. Koordinatenmessvorrichtung (1) nach einem der Ansprüche 1 bis 4, **dadurch gekennzeichnet, dass** der Messkopf (10) über ein Datenkabel zur Informationsübermittlung mit dem Rechner (80) verbunden ist, insbesondere die Tasteinrichtung (12) eine Tastspitze zum berührenden mechanischen Abtasten des Objekts ausgebildet ist.

6. Koordinatenmessvorrichtung (1) nach einem der Ansprüche 1 bis 4, **dadurch gekennzeichnet, dass** die Koordinatenmessvorrichtung (1) mit einer Übertragungseinrichtung zur drahtlosen Übertragung von Messdaten zwischen Messkopf (10) und Rechner (80) ausgebildet ist und/oder die Tasteinrichtung (12) eine optische berührungslose, besonders bevorzugt mit einem Laser-Licht ausgebildete Messvorrichtung, umfasst.

7. Koordinatenmessvorrichtung (1) nach Anspruch 6, **dadurch gekennzeichnet, dass** die Koordinatenmessvorrichtung (1) mit einer Übertragungseinrichtung, besonders bevorzugt nach einem IEEE 802.11-drahtlosen Übertragungsstandard, insbesondere auf 2,4 GHz Technologie-Basis, zur drahtlosen Übertragung von Messdaten zwischen Messkopf (10) und Rechner (80) mit einer Reichweite von ca. 3 m, vorzugsweise 10 m, besonders bevorzugt 30 m ausgebildet ist.

8. Koordinatenmessvorrichtung (1) nach einem der Ansprüche 1 bis 7, **dadurch gekennzeichnet, dass** der Messkopf (10) stiftförmig ausgebildet ist.

9. Koordinatenmessvorrichtung (1) nach einem der Ansprüch 1 bis 8, **dadurch gekennzeichnet, dass** die Koordinatenmessvorrichtung (1) mit einem zweiten Messkopf (20) ausgebildet ist, wobei der zweite Messkopf (20) mit dem zu vermessenden Objekt (100) fest verbindbar ist.

10. Verfahren zum Betreiben einer Koordinatenmessvorrichtung (1) mit einem Messkopf (10) mit einer Tasteinrichtung (12), wobei die Lage der Tasteinrichtung (12) und Messkopf (10) durch Positionserfassungssensoren erfasst wird und bei einem Abtasten eines dreidimensionalen Objekts mittels der Tasteinrichtung ein Abtastpunkt in einem Rechner (80) gespeichert wird, wobei von als Inertialsensoren in Form von Beschleunigungssensoren (40) ausgebildete Positionserfassungssensoren Werte in Form von X-Y-Z Beschleunigungsvektoren und Lageänderungsvektoren erzeugt werden, den Vektoren Zeitstempel von einem Zeitgeber im Messkopf hinzugefügt werden, so dass die Werte zweimal über die Zeitdifferenz zweier erfasster Beschleunigungsvektoren von einem Rechner (80) ausgewertet und addiert werden und somit Positionen der Tasteinrichtung (12), insbesondere an Abtastpunkten, ausgehend von einem definierten Ort der Tasteinrichtung (12) durch Lage- und Ausrichtungsänderungen vom Rechner (80) errechnet und ausgewertet werden.

11. Verfahren nach Anspruch 10, **dadurch gekennzeichnet, dass** aufgrund der Geometrieanordnung der mindestens vier Beschleunigungssensoren rechnerisch ein dreidimensionaler Tetraeder aufgespannt wird.

12. Verfahren nach Anspruch 10 oder 11, **dadurch gekennzeichnet, dass** Daten von Positionen und die Abtastpunkte zwischen Messkopf (10) und Rechner (80) kabellos übertragen werden und insbesondere eine Bezugslage mit Bezugspunkt von dem Messkopf (10) mit Tasteinrichtung (12) zumindest vor, bevorzugt nach und besonders bevorzugt mehrmals während des Messens am Objekt (100) eingenommen wird.

13. Verfahren nach Anspruch 10 bis 12, **dadurch gekennzeichnet, dass** die Abtastpunkte mit einer Genauigkeit von 0,2 mm/10m, insbesondere 0,1 mm/10m, besonders bevorzugt 0,01/10m gemessen werden, wobei Zeitwerte von einem Zeitgeber (75) im Messkopf (10, 20), insbesondere von der Steuerelektronik (70) im Messkopf (10, 20) in Verbindung mit den Messwerten der Beschleunigungswerte ausgewertet werden.

14. Verfahren nach Anspruch 10 bis 13, wobei mit einem zweiten Messkopf (20), auf dem das zu vermessende Objekt definiert befestigt ist, eine Lageänderung des Objekts (100) während des Messverfahrens erfasst wird, wobei mit dem ersten Messkopf (10) das Objekt (100) vermessen wird und die Maße des Objekts (100) durch Differenzbildung der Lageänderung des ersten und zweiten Messkopfes (10, 20) vom Rechner (80) bestimmt werden.

15. Computerprogrammprodukt, das in einen Programmspeicher eines Rechners (80) mit Programmbefehlen ladbar ist, um alle Schritte eines Verfahrens nach einem der Ansprüche 10 bis 14 auszuführen, wenn das Programm im Rechner ausgeführt wird.
